# EUROPÄISCHE PATENTSCHRIFT

(11) **EP 2 470 004 B1**
(45) Veröffentlichungstag und Bekanntmachung des Hinweises auf die Patenterteilung: **10.06.2015**
(21) Anmeldenummer: 10751596.7
(22) Anmeldetag: 27.08.2010
(51) Int. Cl.: A01J 15/12

(54) **VERFAHREN ZUR STEUERUNG UND ÜBERWACHUNG EINES AUTOMATISIERTEN BUTTERUNGSPROZESSES**
METHOD FOR CONTROLLING AND MONITORING AN AUTOMATIZED BUTTERMAKING PROCESS
PROCÉDÉ DE COMMANDE ET DE SURVEILLANCE D'UN PROCESSUS DE FABRICATION DU BEURRE AUTOMATISÉ

(30) Priorität: 28.08.2009 DE 102009039272
(43) Veröffentlichungstag der Anmeldung: 04.07.2012
(73) Patentinhaber: GEA Mechanical Equipment GmbH, 59302 Oelde (DE)
(72) Erfinder: KLAPPER, Siegfried, 33442 Herzebrock-Clarholz (DE)
(74) Vertreter: Specht, Peter
(86) Internationale Anmeldenummer: PCT/EP2010/062573
(87) Internationale Veröffentlichungsnummer: WO 2011/023802

(56) Entgegenhaltungen:
- DD-A1- 264 836
- DE-A1- 3 039 807
- DE-B- 1 097 746
- US-A- 3 324 551

## Beschreibung

Die Erfindung beschreibt ein Butterungsverfahren nach dem Oberbegriff des Anspruchs 1.

Zum Stand der Technik werden die US 2,630,059 und die DD 264 836 genannt.

Ein Verfahren gemäß dem Oberbegriff von Anspruch 1 ist aus De 3039807 bekannt.

Auf dem Bereich der industriellen Butterungsverfahren hat sich die kontinuierliche Butterung mit einer Maschine nach Dr. Fritz aus dem Jahr 1941 durchgesetzt. Durch diese Maschine und das entsprechende Verfahren wurde eine gute und gleichmäßige Qualität der Butter bei geringen Fettverlusten sichergestellt.

Aufgrund des Fritz/Eisenreich - Verfahrens konnten die Arbeitsschritte der Butterbildung, Nachbutterung, Abtrennen der Buttermilch, Kneten der Butter und das Einmischen von Zusätzen automatisiert werden. Dabei wurden die Prozesse der Butterung und Nachbutterung von Butterungstrommeln und das Abtrennen der Buttermilch als auch das Kneten der Buttermasse von Abpressern mit motorisierten Schneckenantrieben gewährleistet.

Die technischen Umsetzung zeigt jedoch das Problem auf, dass sich der Übergang zwischen Nachbutterungstrommel und Abpresser, wo die Abtrennung der Buttermilch stattfindet, unter Umständen mit Butterkorn zusetzt, wodurch es zur Verminderung der Produktionsleistung, bis hin zum zeitweisen Ausfall der Butterungsmaschine kommen kann.

Die Vermeidung von Ablagerungen am Übergang von der Nachbutterungstrommel zum Abpresser stellen ein zentrales Problem dar, da sie von vielen Faktoren abhängen, die vorwiegend durch den Rahm als Ausgangsmaterial und die Verarbeitung desselben bestimmt werden. Diese Faktoren sind unter anderem der Rahmfettgehalt, die Dauer und Temperatur der Rahmreifung, die Rahmtemperatur, die Rahmzulaufzeiten und die gewünschte Butterqualität.

Die visuelle Überwachung erfolgte bislang über ein Schauglas oder eine Kamera, die an der Innenseite der Nachbutterungstrommel angebracht ist und erforderte die ständige Beschäftigung einer Arbeitskraft zur Kontrolle des Überführungsprozesses des Butterkorn/Buttermilch Gemisches aus der Trommel in den Abpresser.

Diese wechselnden Rahmeigenschaften haben im Nachbutterungsprozess verschiedene Butterkornkonsistenzen zur Folge. So weisen größere Butterbrocken oder Rollen auf eine Überbutterung durch zuviel Wasseraufnahme wegen einer zu schnellen Drehzahl des Schlägers hin. Eine Unterbutterung zeigt sich durch eine weiche Masse, was wiederum auf eine zu geringe Drehzahl hinweist. Während die Überbutterung korrigiert werden kann, führt eine Unterbutterung zur Entgleisung des Prozesses.

Die Erfindung setzt daher, ausgehend von dem bestehenden Verfahren, bei der Aufgabe an, die Tendenz zur Bildung von Ablagerungen zu vermindern und gleichzeitig den dauerhaften störungsfreien Betrieb der Butterungsmaschine bei optimaler Abbutterung zu sichern.

Die Erfindung löst die Aufgabe mit den Merkmalen des Anspruchs 1.

Danach erfolgt eine Herstellung von Butter in einer Butterungsmaschine, die zumindest einen Einlauf (1) in einen Butterungszylinder (2) mit einem Schläger (3), eine drehbare Nachbutterungstrommel (5), einen Abpresser (6) und einen Ablauf aufweist.

Das Verfahren zur Herstellung von Butter umfasst dabei folgende Schritte:
a. zulaufender Rahm wird in dem Butterungszylinder (2) mittels eines Schlägers (3) in Butterkorn und Buttermilch umgewandelt;
b. die Butterkorngröße wird in der Nachbutterungstrommel (5) in einem Nachbutterungsprozess kontrolliert;
c. das Butterkorn/Buttermilch Gemisch wird in einen Abpresser (6) überführt; und
d. die Buttermilch wird vom Butterkorn mittels eines Abpressers (6) getrennt und anschließend wird das Butterkorn zu einer Buttermasse umgeformt;
wobei
e. in Schritt b. die Stromaufnahme zum Betreiben der Nachbutterungstrommel (5) und/oder in Schritt d. die Stromaufnahme zum Betreiben des Abpressers (6) gemessen wird, und
f. die Überführung von Schritt b. nach Schritt c. in Abhängigkeit von der Messung in Schritt e. überwacht, gesteuert und geregelt wird.

Vorteilhafte Ausgestaltungen der Erfindung sind den Unteransprüchen zu entnehmen.

Die Butterungsoptimierung lässt sich durch die Überwachung der wechselnden Stromaufnahme während der Nachbutterungsphase gut kontrollieren.

So führt eine Unterbutterung, aufgrund der größeren Menge (keine optimale Phasenumkehr, weiches Butterkorn mit Rahm und teilweise Buttermilch) zu einer erhöhten Stromaufnahme, welche durch Sensorik während der Nachbutterung detektiert werden kann.

Bei Überbutterung kommt es aufgrund des erhöhten Buttermilcheinschlusses zur Bildung einer Butterwalze bzw. Butterrolle. Diese blockiert unter Umständen einen Schacht, welcher zur Überführung des Butterkorns von der Nachbutterungstrommel in einen ersten Abpresser dient. Die dadurch erhöhte Stromaufnahme am Abpressermotor ist in Verbindung mit der Stromaufnahme am Nachbutterungsmotor erfindungsgemäß detektierbar, auswertbar und bei größeren Abweichungen, wie im Fall des Blockierens des Abpressers für zu regelnde Gegenmaßnahmen nützlich.

In einer vorteilhaften Ausführungsform der Erfindung wird eine Kühlung des Butterungskorns durch eine Kühlsektion vorgenommen. Die Kühlung erfolgt zwischen der Butterung und der Nachbutterung, um dem jeweiligen Butterkorn eine härtere Konsistenz zu geben und eine leichtere Einstellung der optimalen Butterkorngröße im Nachbutterungsprozess zu ermöglichen.

Die Butterkörner werden vom Nachbutterungsprozess, unter Ableitung der Buttermilch, in einen Abpresser überführt, welcher mit Hilfe eines Schneckenantriebs das Butterkorn knetet, von Buttermilchresten befreit und hinsichtlich der Wasserverteilung homogenisiert.

Zudem wird eine Vermischung von Zusatzstoffen im Anschluss an das Trennen des Rahms in Butterkorn und Buttermilch durch einen weiteren Abpresser angestrebt. Geschmack und Aussehen des Produktes können in diesem Schritt variiert werden. Die dafür nötigen Zusatzstoffe können in Folge der Homogenisierung relativ leicht in die Butter eingearbeitet werden.

Bei einer vorteilhaften Verfahrensvariante wird zudem das Absaugen von Lufteinschlüssen im Produkt in einer Vakuumzone gewährleistet, um so die Haltbarkeit der Butter zu verbessern.

Um eine abschließenden Feinjustierung der Konsistenz als auch des Wassergehaltes in der Butter durchzuführen ist in der Maschine im Anschluss an die Vakuumzone vorteilhafterweise ein weiterer Abpresser und eine Mischzone für die Wasserdosierung vorgesehen.

Die fertige Butter kann nunmehr über eine Austragpumpe aus dem Gerät abgeführt werden.

Zur Automatisierung der Nachbutterung wird die entsprechende Trommel vorteilhafterweise motorbetrieben, was zudem eine Möglichkeit der Messung einer Prozessgröße ergibt. Dazu kann die Stromaufnahme des Antriebs der Nachbutterungstrommel oder des sich daran anschließenden Abpressers ermittelt werden. Es kann ein Normwert der Stromaufnahme bei optimaler Butterung vorgegeben werden. Weicht die ermittelte Stromaufnahme von diesem Normwert ab, so ist auf Grundlage der Schwankungsunterschiede ein Differenzstrom ermittelbar, welcher als Messgröße zur Steuerung des Butterungsprozesses herangezogen werden kann, um diesen Schwankungen entsprechend entgegenzuwirken.

Die optische Kontrolle, mittels eines Sichtfensters in der Wandung der Nachbutterungstrommel, schafft den Vorteil einer optischen Überwachung, neben der Möglichkeit der messtechnischen Überwachung von prozess- oder produktabhängigen Größen.

Beim Überbuttern entsteht dabei eine Butterwalze durch Buttermilcheinschluss. Daher fließt wenig Buttermilch ab. An der Nachbutterungstrommel kann dabei eine geringe Stromaufnahme detektiert werden. Vorzugsweise ist jedoch die Stromaufnahme eines Antriebs des Abpressers als Messwert und Indikator bei der Steuerung und Regelung des Butterungsprozesses zu nutzen. Große Butterklumpen können eine Verstopfung bzw. Blockade des Schachtes zur Überführung des Butterkorns (in Schritt c.) bewirken. Somit wird die Nachbutterungstrommel durch die Butter mechanisch gebremst, was auf Dauer zu Maschinenschäden führt.

Ein Mittel dies zu verhindern ist, bei Erreichen eines Maximalwertes der Stromaufnahme an der Nachbutterungstrommel den Zulauf des Rahms zu stoppen.

Dabei wird bei einer Überbutterung ein Überschreiten des Grenzwertes der Stromaufnahme des Antriebs im Abpresser detektiert. Daraufhin wird die Schneckendrehzahl um vorzugsweise mindestens 10% angehoben. Dies ist von Vorteil, da somit die Nachbutterungstrommel schneller entleert wird und ein Blockieren des Schachtes zwischen Nachbutterungstrommel und Abpresser vermieden wird. Um eine Änderung der Schneckendrehzahl des Abpressers um vorzugsweise mind. 10% herbeizuführen, muss ein Anstieg der Stromaufnahme von vorzugsweise mindestens 5% des Normwertes vorliegen.

Zugleich wird die Schlägerdrehzahl des Butterungszylinders um vorzugsweise 2% gesenkt. Nach 5min kann eine Rückregelung der Schneckendrehzahl erfolgen, während der Schläger seine verminderte Drehzahl beibehält.

Bei einer weiteren zweckmäßigen Verfahrensvariante führt ein Überschreiten des Grenzwertes der Stromaufnahme des Antriebs der Nachbutterungstrommel zu einer Drosselung oder zum Zulaufstopp der zugeführten Rahmmenge. Vorteilhaft hierbei ist die Tatsache, dass sich keine Ablagerungen aufgrund von Stauungen bilden können.

Beim Unterbuttern erfolgt ebenfalls ein Überschreiten des Grenzwertes der Stromaufnahme des Antriebs der Nachbutterungstrommel, der durch eine Erhöhung der Schlägerdrehzahl des Butterungszylinders um vorzugsweise mindestens 2% entgegengewirkt werden kann, da durch die daraus resultierende veränderte Butterkorngröße eine bessere Überführung des Butterkorn/Buttermilch Gemisches gewährleistet ist.

Der Schläger braucht dabei nur über einen kurzen Zeitraum, beispielsweise über 5min, mit erhöhter Schlägerdrehzaht betrieben werden, bis eine Wiedereinstellung des Normwertes erfolgt ist.

In einer vorteilhaften Ausführungsform der Erfindung überwacht eine Sensorik, gekoppelt mit einer Steuereinheit, die Stromaufnahme des Antriebs der Nachbutterung und kann auf Veränderungen der Stromaufnahme entsprechend reagieren. Diese Vorgehensweise der Mess- und Steuertechnik ermöglich eine unkomplizierte und zudem zeitnahe Überwachung des Produktionsprozesses.

Ein Ausführungsbeispiel der Erfindung wird anhand der beigefügten Zeichnungen erläutert. Darüber hinaus werden Abbildungen aufgeführt, anhand welcher die Problemlösung veranschaulicht wird.

Sie zeigen:
- Fig.1: eine schematische Darstellung einer Butterungsmaschine, die nach dem Fritz/Eisenreich Verfahren betrieben wird,
- Fig.2: eine detailliertere Darstellung einer Butterungsmaschine mit verschiedenen Sektionen der Maschine sowie verschiedenen Möglichkeiten der Steuerung und Regelung,
- Fig.3a: eine schematischer Blick in eine Butterungstrommel während der Nachbutterung des Butterkorns bei der Unterbutterung,
- Fig.3b: eine schematischer Blick in eine Butterungstrommel während der Nachbutterung des Butterkorns bei der normalen Butterung,
- Fig.3c: eine schematischer Blick in eine Butterungstrommel während der Nachbutterung des Butterkorns bei der Überbutterung (3c).

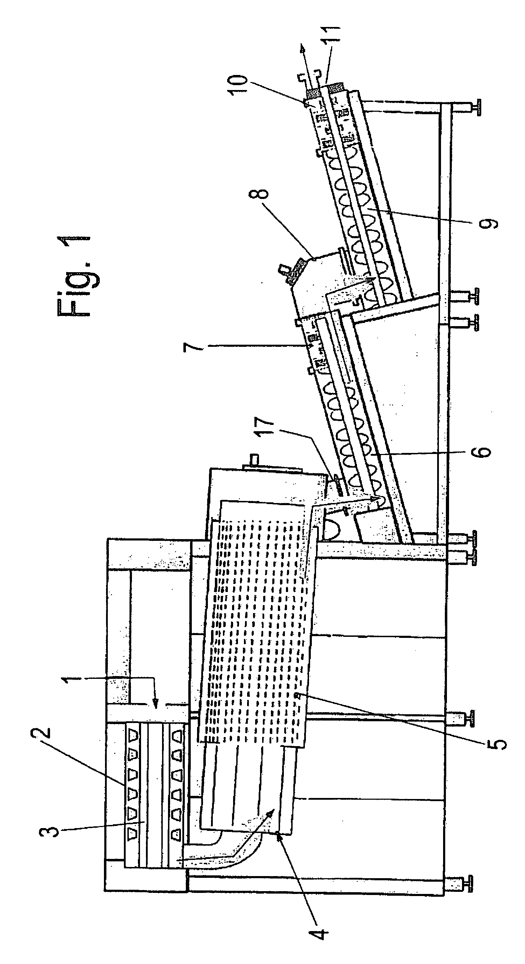

Fig. 1 zeigt eine Butterungsmaschine, die einen Einlauf 1 für Rahm aufweist, sowie einen Butterungszylinder 2, in dem ein drehbar angeordneter Schläger 3 angeordnet ist, für die Bildung von Butterkorns und Buttermilch aus zugeführtem Rahm.

In einer Kühlsektion 4 erhält das Butterkorn eine härtere Konsistenz und lässt sich anschließend besser bearbeiten.

In einer Nachbutterungstrommel 5 wird im Nachbutterungsprozess die optimale Butterkorngröße eingestellt. Anschließend wird das Butterkorn über einen Schacht 17 in einen Abpresser 6 überführt.

Der Abpresser 6 wandelt das Butterkorn in eine homogene "Wasser in Öl Emulsion" um und befreit gleichzeitig die Butter von Buttermilchresten, welche anschließend abgeführt werden.

In einer Mischzone 7 werden zu der Butter Wasser, Säurekonzentrate und Salzlake zudosiert um den Geschmack und die Konsistenz der Butter zu optimieren.

In einer Vakuumkammer 8 wird der Butter Luft entzogen, um deren Haltbarkeit zu erhöhen.

Ein weiterer Abpresser 9, sorgt zusammen mit einer sich daran anschließende Mischzone 10 für eine gleichmäßige Verteilung des Wassergehaltes in der Butter und eine Optimierung des Wassergehaltes.

Mit einer Austragspumpe 11 wird der Ablauf der fertigen Butter aus der Maschine gewährleistet.

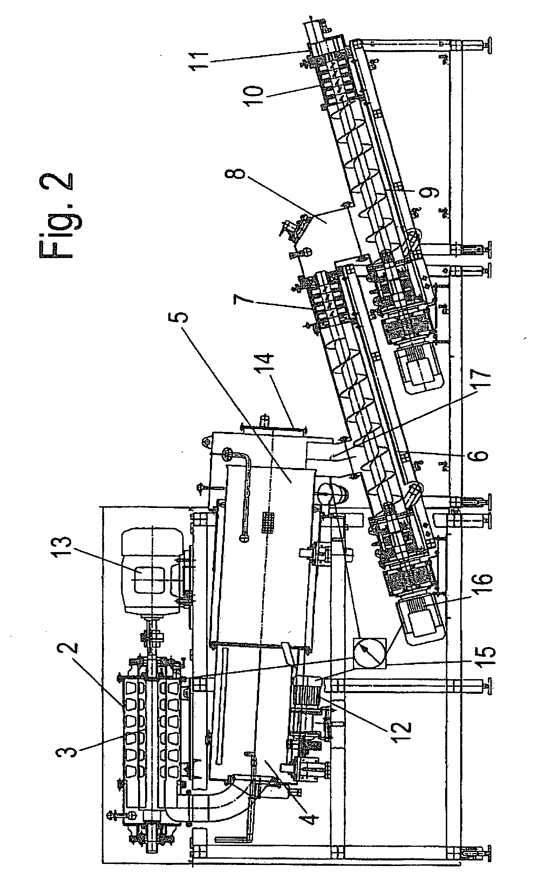

Wie in Fig. 2 aufgezeigt, wird die Nachbutterungstrommel 5 durch einen Antrieb 12 und ein Schläger 3 des Butterungszylinders 2 durch einen Antrieb 13 angetrieben.

Die Stromaufnahme der Antriebe 12 und 16 kann durch die Sensorik einer Mess- und Steuereinheit 15 überwacht werden. Zudem kann eine optische Kontrolle der Nachbutterung durch ein Sichtfenster 14 erfolgen.

Anhand der detaillierteren Darstellung von Fig. 2 soll nunmehr die Problematik der Abbutterung beschrieben und die Möglichkeiten der Einflussnahme erläutert werden. Kommt es zur Unterbutterung, das heißt zu einer Leistungserhöhung durch zu wenig Buttermilchablauf in der Nachbutterungstrommel 5, so tritt eine Schwankung der Stromaufnahme in einem gewissen Differenzbereich auf. Gleiches gilt für das Überbuttern. Hier treten ebenso wie bei der Unterbutterung auch Schwankungen der Stromaufnahme am Abpresser 6 auf.

Steigt die Stromaufnahme in beiden Fällen über einen definierten Grenzwert (Normalverbrauch + Differenzverbrauch) an, so sollen verschiedene Aktionen dieser Abweichung vom Normfall entgegenwirken.

Dies sind unter anderem:
- eine Erhöhung der Schneckendrehzahl im Abpresser 6;
- eine Abschaltung des Zulaufs des Rahms;
- eine Veränderung der Schlägerzahl in Butterungszylinder 2;

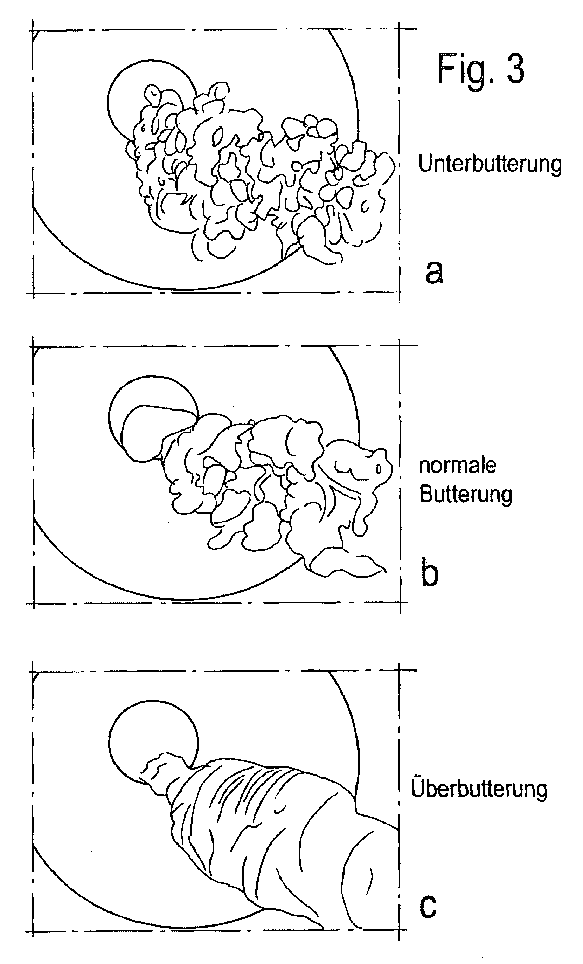

In Fig. 3a ist eine Unterbutterung aus der Sichtfensterperspektive 14 in der Nachbutterungstrommel 5 dargestellt. In Fig. 3b ist der Blick auf eine optimale Butterung gezeigt und in Fig. 3c erkennt man die Ausbildung einer Butterwalze als Effekt der Überbutterung. Die Drehzahl des Schlägers 3 in dem Butterungszylinder 2 bestimmt dabei zum Großteil die Korngröße des Butterkorns. Dieses ist im Optimalfall faustgroß.

### Bezugszeichen

- Einlauf: 1
- Butterungszylinder: 2
- Schläger: 3
- Kühlsektion: 4
- Nachbutterungstrommel: 5
- Abpresser: 6
- Mischzone: 7
- Vakuumkammer: 8
- Abpresser: 9
- Mischzone: 10
- Austragspumpe: 11
- Antrieb: 12
- Antrieb: 13
- Sichtfenster: 14
- Mess- und Steuereinheit: 15
- Antrieb: 16
- Schacht: 17

## Patentansprüche

1. Verfahren zur Herstellung von Butter in einer Butterungsmaschine, die zumindest einen Einlauf (1) in einen Butterungszylinder (2) mit einem Schläger (3), eine drehbare Nachbutterungstrommel (5), einen Abpresser (6) und einen Ablauf aufweist, mit folgenden Schritten
a. zulaufender Rahm wird in dem Butterungszylinder (2) mittels eines Schlägers (3) in Butterkorn und Buttermilch umgewandelt;
b. die Butterkorngröße wird in der Nachbutterungstrommel (5) in einem Nachbutterungsprozess kontrolliert;
c. das Butterkorn/Buttermilch Gemisch wird in einen Abpresser (6) überführt; und
d. die Buttermilch wird vom Butterkorn mittels eines Abpressers (6) getrennt und anschließend wird das Butterkorn zu einer Buttermasse umgeformt;
**dadurch gekennzeichnet, dass**
e. in Schritt b. die Stromaufnahme zum Betreiben der Nachbutterungstrommel (5) und/oder in Schritt d. die Stromaufnahme zum Betreiben des Abpressers (6) gemessen wird, und
f. die Überführung von Schritt b. nach Schritt c. in Abhängigkeit von der Messung in Schritt e. überwacht, gesteuert und geregelt wird.

2. Verfahren nach einem der vorangegangenen Ansprüche, **dadurch gekennzeichnet, dass** eine Kühlung des Butterkorns zwischen Schritt a und Schritt b durch eine Kühlsektion (4) erfolgt.

3. Verfahren nach einem der vorangegangenen Ansprüche, **dadurch gekennzeichnet, dass** eine Zudosierung und Vermischung von Zusätzen durch eine Mischzone (7) im Anschluss an den Abpresser (6) erfolgt.

4. Verfahren nach einem der vorangegangenen Ansprüche, **dadurch gekennzeichnet, dass** eine Entfernung von Luft aus einer Buttermasse durch eine Vakuumzone (8) im Anschluss an eine Mischzone (7) ermöglicht wird.

5. Verfahren nach einem der vorangegangenen Ansprüche, **dadurch gekennzeichnet, dass** die Feineinstellung der Konsistenz des Produktes als auch dessen Wassergehalt durch einen weiteren Abpresser (9) und eine weitere Mischzone (10) im Anschluss an eine Vakuumzone (8) vorgenommen wird.

6. Verfahren nach einem der vorangegangenen Ansprüche, **dadurch gekennzeichnet, dass** die Ausgabe der fertigen Buttermasse durch eine Austragspumpe (11) im Anschluss an eine Mischzone (10) erfolgt.

7. Verfahren nach einem der vorangegangenen Ansprüche , **dadurch gekennzeichnet, dass** die Nachbutterungstrommel (5) durch einen Antrieb (12) und der Schläger (3) des Butterungszylinders (2) durch einen Antrieb (13) gedreht wird und dass die aufgewendete Stromaufnahme des Antriebs (12) und/oder des Antriebs (16) gemessen wird und der auftretende Differenzstrom, bei einer Abweichung vom Normwert, als Messgröße herangezogen wird.

8. Verfahren nach einem der vorangegangenen Ansprüche, **dadurch gekennzeichnet, dass** die zusätzliche optische Kontrolle des Butterungsprozesses in der Nachbutterungstrommel (5) über Sichtfenster (14) erfolgt.

9. Verfahren nach einem der vorangegangenen Ansprüche, **dadurch gekennzeichnet, dass** bei Überschreiten des Grenzwertes der Stromaufnahme des Antriebs (16) in Schritt d. von größer als 5% als Gegenmaßnahme die Schneckendrehzahl des Abpressers (6) um mindestens 10% erhöht wird.

10. Verfahren nach einem der vorangegangenen Ansprüche, **dadurch gekennzeichnet, dass** die Butterungsmaschine bei Überschreiten des Grenzwertes des Stromaufnahme in Schritt b. und/oder in Schritt d. als Gegenmaßnahme den Zulauf an Rahm am Einlauf (1) drosselt oder stoppt.

11. Verfahren nach einem der vorangegangenen Ansprüche, **dadurch gekennzeichnet, dass** bei Überschreiten des Grenzwertes der Stromaufnahme in Schritt b. und/oder in Schritt d. als Gegenmaßnahme die Schlägerdrehzahl vom Schläger (3) des Butterungszylinders (2) um mindestens 2% erhöht wird.

12. Verfahren nach einem der vorangegangenen Ansprüche, **dadurch gekennzeichnet, dass** die Überwachung der Stromaufnahme in Schritt b durch eine Sensorik am Antrieb (12) erfolgt und durch eine Steuereinheit (15) ausgewertet wird, um eine Erhöhung der Schlägerdrehzahl des Schlägers (3), einen Zulaufstopp oder eine Erhöhung der Schneckendrehzahl des Abpressers (6) vorzunehmen.

13. Verfahren nach einem der vorangegangenen Ansprüche, **dadurch gekennzeichnet, dass** bei einer Blockade des Schachtes (17), die Schlägerdrehzahl des Butterungszylinders (2) gesenkt und die Schneckendrehzahl des Abpressers (6) erhöht wird.

## Claims

1. Method for producing butter in a churning machine which has at least one inlet (1) into a churning cylinder (2) with a beater (3), and has a rotatable after-churning drum (5), a texturizer (6) and an outlet, with the following steps
a. supplied cream is converted in the churning cylinder (2) into butter grains and butter milk by means of a beater (3);
b. the butter grain size is checked in an after-churning process in the after-churning drum (5);
c. the butter grain/butter milk mixture is transferred into a texturizer (6); and
d. the butter milk is separated from the butter grains by means of a texturizer (6) and then the butter grains are converted into a butter mass;
**characterized in that**
e. the current consumption for operating the after-churning drum (5) is measured in step b., and/or the current consumption for operating the texturizer (6) is measured in step d., and
f. the transfer from step b. to step c. is monitored, controlled and regulated depending on the measurement in step e.

2. Method according to the preceding claim, **characterized in that** the butter grains are cooled between step a. and step b. by a cooling section (4).

3. Method according to either of the preceding claims, **characterized in that** additives are metered in and mixed by a mixing zone (7) following the texturizer (6).

4. Method according to one of the preceding claims, **characterized in that** air can be removed from a butter mass by a vacuum zone (8) following a mixing zone (7).

5. Method according to one of the preceding claims, **characterized in that** the precise adjustment of the consistency of the product and also of the water content thereof is undertaken by a further texturizer (9) and a further mixing zone (10) following a vacuum zone (8).

6. Method according to one of the preceding claims, **characterized in that** the finished butter mass is discharged by an ejector pump (11) following a mixing zone (10).

7. Method according to one of the preceding claims, **characterized in that** the after-churning drum (5) is rotated by a drive (12) and the beater (3) of the churning cylinder (2) is rotated by a drive (13), and **in that** the current consumption used by the drive (12) and/or the drive (16) is measured and the differential current which occurs is used as measurement variable in the event of a deviation from the standard value.

8. Method according to one of the preceding claims, **characterized in that** the additional optical checking of the churning process in the after-churning drum (5) takes place via inspection windows (14).

9. Method according to one of the preceding claims, **characterized in that**, when the limit value of the current consumption of the drive (16) in step d. is exceeded by greater than 5%, the worm speed of the texturizer (6) is increased by at least 10% as a countermeasure.

10. Method according to one of the preceding claims, **characterized in that**, when the limit value of the current consumption in step b. and/or in step d. is exceeded, the churning machine constricts or stops the supply of cream at the inlet (1) as a countermeasure.

11. Method according to one of the preceding claims, **characterized in that**, when the limit value of the current consumption in step b. and/or in step d. is exceeded, the beater speed of the beater (3) of the churning cylinder (2) is increased by at least 2% as a countermeasure.

12. Method according to one of the preceding claims, **characterized in that** the current consumption is monitored in step b. by a sensor arrangement on the drive (12) and is evaluated by a control unit (15) in order to increase the beater speed of the beater (3), stop the supply or increase the worm speed of the texturizer (6).

13. Method according to one of the preceding claims, **characterized in that**, in the event of the shaft (17) being blocked, the beater speed of the churning cylinder (2) is reduced and the worm speed of the texturizer (6) is increased.

## Revendications

1. Procédé de fabrication du beurre dans une machine de barattage comprenant au moins une entrée (1) dans un cylindre de barattage (2) équipé d'un organe batteur (3), un tambour de post-barattage (5) mobile en rotation, un pressoir séparateur (6) et une sortie comprenant les étapes consistant à :
a. transformer la crème introduite dans le cylindre de barattage (2) au moyen de l'organe batteur (3) en grains de beurre et en petit lait,
b. contrôler la dimension des grains de beurre dans le tambour de post-barattage (5) selon un procédé de post-barattage,
c. transférer le mélange grains de beurre / petit lait dans un pressoir séparateur (6), et
d. séparer le petit lait des grains de beurre au moyen du pressoir séparateur (6) puis mettre en forme les grains de beurre en une masse de beurre,
**caractérisé en ce que** :
e. dans l'étape b. on mesure la consommation de courant pour entrainer le tambour de post-barattage (5) et/ou dans l'étape d on mesure la consommation de courant pour entrainer le pressoir séparateur (6), et
f. le transfert de l'étape b. vers l'étape c. est surveillé, commandé et régulé en fonction de la mesure effectuée dans l'étape e.

2. Procédé conforme à la revendication précédente, **caractérisé en ce que** l'on effectue un refroidissement des grains de beurre entre l'étape a. et l'étape b. dans un segment de refroidissement (4).

3. Procédé conforme à l'une des revendications précédentes, **caractérisé en ce que** l'on effectue une addition dosée et un mélange d'additifs dans une zone de mélange (7) connectée au pressoir séparateur (6).

4. Procédé conforme à l'une des revendications précédentes, **caractérisé en ce que** l'on peut effectuer une extraction d'air de la masse de beurre dans une zone de mise sous vide (8) connectée à une zone de mélange (7).

5. Procédé conforme à l'une des revendications précédentes, **caractérisé en ce que** l'on effectue le réglage fin de la consistance du produit ainsi que de sa teneur en eau au moyen d'un autre pressoir séparateur (9) et d'une autre zone de malaxage (10) connectée à une zone de mise sous vide (8).

6. Procédé conforme à l'une des revendications précédentes, **caractérisé en ce que** l'extraction de la masse de beurre finale s'effectue par une pompe de décharge (11) connectée à une zone de malaxage (10).

7. Procédé conforme à l'une des revendications précédentes, **caractérisé en ce que** le tambour de post-barattage (5) est mis en rotation par un organe d'entrainement (12) tandis que l'organe batteur (3) du cylindre de barattage (2) mis en rotation par des organes d'entrainement (13), et, la consommation de courant utilisée de l'organe d'entrainement (12) ou de l'organe d'entrainement (16) est mesurée et la différence de courant apparaissant est utilisée en tant que grandeur de mesure en présence d'un écart avec une valeur normalisée.

8. Procédé conforme à l'une des revendications précédentes, **caractérisé en ce que** l'on effectue un contrôle optique supplémentaire du procédé de barattage dans le tambour de post-barattage (5) par une fenêtre de visualisation (14).

9. Procédé conforme à l'une des revendications précédentes, **caractérisé en ce que** en présence d'un dépassement de la valeur limite de la consommation de courant de l'organe d'entrainement (16) dans l'étape d supérieur à 5%, on augmente en tant que mesure antagoniste la vitesse de rotation de la vis sans fin du pressoir séparateur (6) d'au moins 10%.

10. Procédé conforme à l'une des revendications précédentes, **caractérisé en ce que**, en cas de dépassement de la valeur limite de la consommation de courant dans l'étape b. et/ou dans l'étape d., en tant que mesure antagoniste, la machine de barattage étrangle ou stoppe la fourniture de crème au niveau de l'entrée (1).

11. Procédé conforme à l'une des revendications précédentes, **caractérisé en ce que** en cas de dépassement de la valeur limite de la consommation de courant dans l'étape b. et/ou dans l'étape d., on augmente en tant que mesure antagoniste la vitesse de rotation de l'organe batteur (3) du cylindre de barattage (2) d'au moins 2%.

12. Procédé conforme à l'une des revendications précédentes, **caractérisé en ce que** l'on effectue la surveillance de la consommation de courant dans l'étape b. par analyse sensorielle au niveau de l'organe d'entrainement (12) et on l'exploite par l'intermédiaire d'une unité de commande (15) pour mettre en oeuvre une augmentation de la vitesse de rotation de l'organe batteur (3), un arrêt de l'alimentation ou un augmentation de la vitesse de rotation de la vis sans fin du pressoir séparateur (6).

13. Procédé conforme à l'une des revendications précédentes, **caractérisé en ce que** en cas de blocage du puits d'extraction (17) on diminue la vitesse de rotation de l'organe batteur du cylindre de barattage (2) et on augmente la vitesse de rotation de la vis sans fin du pressoir séparateur (6).
